# EUROPÄISCHE PATENTSCHRIFT

(11) **EP 2 477 373 B1**
(45) Veröffentlichungstag und Bekanntmachung des Hinweises auf die Patenterteilung: **23.07.2014**
(21) Anmeldenummer: 11188122.3
(22) Anmeldetag: 10.06.2008
(51) Int. Cl.: H04L 29/06, H04L 12/46, H04L 12/24

(54) **Endpunkte und System zur sicheren Übertragung von Daten zwischen sicheren Netzwerken**
End points and system for the safe transfer of data between secure networks
Points terminaux et système de transmission sécurisée de données entre des réseaux sécurisés

(43) Veröffentlichungstag der Anmeldung: 18.07.2012
(62) Teilanmeldung aus: 08010510.9
(73) Patentinhaber: Secunet Security Networks Aktiengesellschaft, 45128 Essen (DE)
(72) Erfinder: Roßberg, Michael, 17498 Neuenkirchen (DE); Schäfer, Günter, 98693 Illmenau (DE); Martius, Kai, 01738 Dornhain (DE)
(74) Vertreter: Harrison, Robert John

(56) Entgegenhaltungen:
- EP-A1- 1 909 436
- WO-A-2005/117694
- US-A1- 2005 094 577

## Beschreibung

Die Erfindung betrifft einen Endpunkt für ein dezentrales System zur sicheren Übertragung von Daten in einer übergeordneten Netzstruktur (Overlay-Netzwerk). Die Erfindung betrifft außerdem ein System zur gesicherten Übertragung von Daten über eine übergeordnete Netzwerkstruktur (Overlay-Netzwerk) umfassend mindestens zwei Endpunkte bei dem die mindestens zwei Endpunkte an ein Transportnetzwerk angeschlossen sind.

Endpunkte zum Austausch bzw. Transport von Daten zwischen unterschiedlichen Einheiten einer Organisation bzw. eines Unternehmens sind aus der Praxis grundsätzlich bekannt. Bei den aus der Praxis bekannten Endpunkten ist zunächst eine aufwendige Konfiguration bzw. Vorbereitung der einzelnen Einheiten der Organisation bzw. des Unternehmens erforderlich. Zunächst müssen in allen Einheiten die für die Kommunikation erforderlichen Parameter der in der Organisation vorhandenen Einheiten bzw. der Einheiten, mit denen Daten ausgetauscht werden sollen, eingespeichert werden. Sobald Einheiten bzw. Netzwerke aus der Organisation bzw. dem Unternehmen entfernt oder hinzugeführt werden, ist eine umständliche Neukonfiguration bzw. Umprogrammierung der einzelnen Einheiten erforderlich. Nachteilig bei den aus der Praxis bekannten Endpunkten ist, dass eine Neukonfiguration der Einheiten kostenträchtig sowie fehleranfällig ist. Eine fehlerhafte Konfiguration der Einheiten kann die Sicherheit beim Datentransport zwischen den einzelnen ' Einheiten des Unternehmens gefährden, so dass Dritte Kenntnis von den transportierten Daten erlangen können.

So ist aus WO 2005/117694 A2 ein System für sichere Kommunikation zwischen einem virtuellen geographisch verteilten Internet Protokoll (IP) Router bekannt, welcher eine Vielzahl von Gateways umfasst. Hierbei wird für jedes Gateway zumindest ein Tunnel vorgesehen, mit welchem das Gateways mit mindestens einem der anderen Gateways kommuniziert. Der virtuell verteilte Router ist so ausgestaltet, dass er durch eine einzelne Entity verwaltet wird. Tunnel, die im virtuell verteilten Router nicht mehr verfügbar sind, werden automatisch rekonfiguriert und durch vorübergehende Tunnel ersetzt.

Nachdem ein Gateway an einen "Entry Point" des externen Netzwerk angeschlossen worden ist, lädt das Gateway Informationen und schließt sich dem Meta-Hop genannten System an. Die Schrift lässt hierbei völlig offen mittels welcher Techniken ein Gateway, welches sich an den Meta-Hop anschließen will, mit weiteren Informationen versorgt wird und wie dieses Gateway die anderen Gateways von seiner Existenz informiert. Hierbei wird lediglich auf automatische Verwaltungsregeln (policy management) verwiesen.

Es ist des Weiteren eine Verwaltungskonsole offenbart, mittels welcher ein Administrator die Gateways eines Meta-Hops zentral konfigurieren kann. Es ist lediglich angedeutet, dass die Gateways selbst organisierend auf Änderungen in ihrer Anordnung ohne Unterstützung durch den Administrator reagieren können. Ein zentraler Server (Meta-Hop Heart Server) übernimmt Aufgaben wie die automatische Verwaltung von Gateway-Mitgliedschaften, Tunnelrekonfigurationen und stellt Adressen für Anwendungsproxies zur Verfügung. Das Kontaktieren des Meta-Hop Heart-Servers durch Gateways, welche sich hinter anderen befinden, sowie ein verteiltes Rekonfigurieren von Tunneln wird nicht beschrieben und erschließt sich auch nicht indirekt.

Aus EP 1 909 436 A1 ist des Weiteren ein Overlaynetzwerk in Form eines virtuellen Rings bekannt, bei dem Netzwerkknoten nach Authentifizierung durch einen Virtuellen Ringmanager in den Ring eingefügt werden. Ein Netzknoten der neu aufgenommen werden möchte sendet hierzu an den Virtuellen Ringmanager eine "insertion request message". Hierfür muss jedem aufzunehmenden Netzknoten zumindest die IP Adresse des Virtuellen Ringmanagers, beziehungsweise auch die IP Adresse eines Backup Ringmanagers bekannt sein. Nach Empfang einer Einfügeanfrage authentifiziert der Virtuelle Ringmanager den neu aufzunehmenden Netzknoten mit in einer zentralen Datenbank, zum Beispiel einem RADIUS Server gespeicherten Daten. Bei erfolgreicher Authentifikation sendet der Virtuelle Ringmanager an den neu aufzunehmenden Netzknoten eine Bestätigungmachricht mit den IP Adressen von zwei benachbarten Netzknoten, zwischen die sich der neu aufzunehmende Netzknoten einfügen kann. Dies können zwei beliebige benachbarte Netzknoten sein. Es ist jedoch auch offenbart, dass einer der beiden benachbarten Netzknoten immer der Virtuellen Ringmanagers ist. Die Netzknoten, einschließlich des Virtuellen Ringmanagers umfassen einen Mikroprozessor zur Ausführung eines Computerprogramms welches in Speichermitteln gespeichert ist, um die beschriebenen Funktionen auszuführen.

Dieser bekannte Virtuelle Ring setzt somit voraus, dass die neu aufzunehmenden Knoten mit den IP Adressen des Virtuellen Ringmanagers vorkonfiguriert sein müssen. Der dedizierte Ringmanager stellt insbesondere bei der Verwendung von asymmetrischer Kryptographie einen potentiellen Flaschenhals dar, sodass ein gleichzeitiges Einfügen vieler Knoten nicht möglich ist. Bei Netzstörungen, die zu einer Aufteilung in Teilnetze führt, in denen weder der Virtuelle Ringmanager noch ein Backup Ringmanager vorhanden ist, ist das Teilnetz ohne Ringmanager nicht in der Lage funktionsfähig zu bleiben, beziehungsweise neue Netzknoten einzubinden.

Demgegenüber liegt der Erfindung das technische Problem zugrunde, Endpunkte vorzustellen, mit dem Netzwerke einer Organisation bzw. eines Unternehmens auf einfache Weise sicher eingerichtet werden können und mit dem die vorstehend beschriebenen Nachteile vermieden werden. Zur Lösung des technischen Problems lehrt die Erfindung einen Endpunkt für ein dezentrales System zur sicheren Übertragung von Daten in einer übergeordneten Netzwerkstruktur (Overlay-Netzwerk), wobei das dezentrale System aus wenigstens zwei Endpunkten gebildet wird. Hierbei ist jeder Endpunkt dazu ausgestaltet zu versendende Daten zu verschlüsseln und empfangene Daten zu entschlüsseln; bestimmt durch die Vorgänger- und Nachfolgerbeziehung der ihm zugeordneten sicheren Netze, in der übergeordneten Netzwerkstruktur sich benachbart zu anderen Endpunkten anzuordnen; in einem Initialisierungschritt zumindest eine sichere Verbindung für einen Datentransport von dem Endpunkt zu einem anderen Endpunkt herzustellen; in einem Lokalisierungsschritt, wenn der Endpunkt nicht in die übergeordnete Netzwerkstruktur eingebunden ist, einen anderen Endpunkt zu ermitteln, welcher bereits in die übergeordnete Netzwerkstruktur eingebunden ist; wobei der Endpunkt in dem Lokalisierungsschritt eine Austauschanfrage an einen bereits verbundenen Endpunkt, der bereits Teil der übergeordneten Netzwerkstruktur ist, sendet um eine sichere Verbindung zu dem zu ermittelnden Nachbarn (E5) aufzubauen; bei einer empfangenen Austauschanbrage, wenn der Endpunkt bereits in die übergeordnete Netzwerkstruktur eingebunden ist überprüft ob der Endpunkt zu dem Endpunkt, der eine Austauschanfrage initialisiert hat die ähnlichste Adresse aufweist und deshalb für die Einfügung des Endpunktes, der eine Austauschanfrage initialisiert hat zuständig ist und im Falle der Nichtzuständigkeit die Austauschanfrage weiter entlang der übergeordneten Netzwerkstruktur zu einem benachbarten Endpunkt zu schicken; im Falle der Zuständigkeit ein Antwortsignal zu senden, welches die Adressen der Endpunkte enthalt, zwischen welchen der Endpunkt, der eine Austauschanfrage initialisiert hat, einzufügen ist; bei Empfang eines Antwortsignal welches an einem Endpunkt gerichtet ist, wenn der Endpunkt nicht in die übergeordnete Netzwerkstruktur eingebunden ist und eine Austauschanfrage initialisiert hat, eine jeweils eine sichere Verbindung zu den in dem Antwortsignal enthaltenen Endpunkten aufzubauen; in einem Transportschritt Daten zu einem Endpunkt eines Zielnetzwerkes zu übertragen.

Hiedurch wird die Grundlage für die Konfiguration von Endpunkten zur sicheren Übertragungen von Daten zwischen sicheren Netzwerken geschaffen, wobei eine übergeordnete Netzwerkstruktur (Overlay) mit zumindest zwei sicheren Netzwerken erstellt wird, wobei ein sicheres Netzwerk benachbart zu einem weiteren sicheren Netzwerk angeordnet wird, wobei zwischen dem sicheren Netzwerk und dem weiteren sicheren Netzwerk in zumindest einem Initialisierungsschritt zumindest eine Verbindung zum Datentransport durch zumindest einen sicheren Tunnel hergestellt wird.

Empfohlenermaßen wird zumindest ein vorangehendes, sicheres Netzwerk (Vorgänger) und zumindest ein nachfolgendes, sicheres Netzwerk (Nachfolger) benachbart zu dem sicheren Netzwerk in der übergeordneten Netzwerkstruktur angeordnet. Es liegt im Rahmen der Erfindung, dass alle sicheren Netzwerke in der übergeordneten Netzwerkstruktur miteinander verbunden sind. Es empfiehlt sich, dass das sichere Netzwerk und das weitere sichere Netzwerk bevorzugt mit der Maßgabe miteinander verbunden sind, dass die Verbindung entlang der übergeordneten Netzwerkstrukturen eingerichtet wird. Vorzugsweise werden die Daten in zumindest einem Transportschritt von dem sicheren Netzwerk über die Verbindung zu einem sicheren Zielnetzwerk übermittelt bzw. gesendet. Gemäß einer bevorzugten Ausführungsform wird zwischen dem Vorgänger und dem Nachfolger eine Verbindung zum Dalentransport zweckmäßigerweise durch zumindest einen sicheren Tunnel hergestellt. Es ist möglich, dass das sichere Netzwerk ein drahtloses Netzwerk (WLAN) ist. Es empfiehlt sich, dass ein sicheres Netzwerk mit der Maßgabe ausgestattet ist, dass zweckmäßigerweise ausschließlich ein autorisierter Zugriff auf das sichere Netzwerk bzw. aus zumindest einer, in dem sicheren Netzwerk angeordnete Komponenten möglich ist. Eine in dem sicheren Netzwerk angeordnete Komponente ist beispielsweise ein Computer, ein mobiler Computer, ein Personal Digital Assistant (PDA) oder ein weiteres sicheres Netzwerk, beispielsweise ein drahtloses Netzwerk (WLAN).

Es liegt im Rahmen der Erfindung, dass die übergeordnete Netzwerkstruktur eine topologische Struktur und vorzugsweise eine zweidimensionale topologische Struktur ist. Es ist möglich, dass die topologische Struktur dreidimensional oder höher dimensional ausgestaltet ist. Zweckmäßigerweise werden die sicheren Netzwerke in der übergeordneten Netzwerkstruktur anhand ihrer beispielsweise nach aufsteigenden Werten geordneten Adressen angeordnet. Gemäß einer Ausführungsform werden die Verbindungen zwischen den sicheren Netzwerken zumindest der topologischen Struktur bzw. der übergeordneten Netzwerkstruktur entsprechend ausgebildet. Die Summe der vorzugsweise physischen Verbindungen, die zwischen den sicheren Netzwerken existieren bzw. über die Daten zwischen sicheren Netzwerken übermittelt werden, wird als Transportnetz bezeichnet. Es ist möglich, dass das Transportnetz von der übergeordneten Netzwerkstruktur abweicht. Es liegt im Rahmen der Erfindung, dass das Transportnetz zumindest die Verbindungen zwischen den sicheren Netzwerken aufweist, die vorzugsweise entlang der übergeordneten Netzwerkstruktur ausgebildet sind. Gemäß einer bevorzugten Ausführungsform sind in dem Transportnetz bevorzugt eine Mehrzahl von sicheren Netzwerken und besonders bevorzugt alle sicheren Netzwerke miteinander bzw. untereinander verbunden.

Dass die Verbindung zwischen dem sicheren Netzwerk und dem weiteren sicheren Netzwerk bzw. dem Vorgänger und/oder Nachfolger durch zumindest einen sicheren Tunnel hergestellt wird, meint im Rahmen der Erfindung, dass die Verbindung über ein anderes Netz bzw. eine andere Netzinfrastruktur zum Transfer von Daten von dem sicheren Netzwerk zu dem weiteren sicheren Netzwerk bzw. dem Vorgänger und/oder dem Nachfolger übermittelt werden. Es liegt im Rahmen der Erfindung, dass das Zielnetzwerk ein sicheres Netzwerk ist, das in der übergeordneten Netzwerkstruktur angeordnet ist.

Vorzugsweise wird die Verbindung zwischen dem sicheren Netzwerk und dem weiteren sicheren Netzwerk bzw. dem Vorgänger und/oder dem Nachfolger über eine virtuelle Verbindung in einer Einheit und/oder über eine direkte - Verbindung und/oder ein Zwischensystem hergestellt. Einheit meint im Rahmen der Erfindung eine Überstruktur, die vorzugsweise zumindest ein und bevorzugt zumindest zwei sichere Netzwerke aufweist. Die in einer Einheit bzw. Überstruktur angeordneten, sicheren Netzwerke werden nachfolgend als innere Netzwerke bezeichnet. Empfohlenermaßen sind die inneren Netzwerke in der Einheit miteinander verbunden, wobei die Einheit bzw. Überstruktur Teil der übergeordneten Netzwerkstruktur ist. Zweckmäßigerweise wird eine direkte Verbindung im Initialisierungsschritt zwischen zwei sicheren Netzwerken vorzugsweise proaktiv bzw. eigeninitiativ hergestellt. Gemäß einer Ausführungsform des erfindungsgemäßen Verfahrens wird die Verbindung zwischen zwei sicheren Netzwerken über ein Zwischensystem hergestellt, welches Zwischensystem beispielsweise ein beliebiges Netzwerk oder das Internet darstellt.

Es liegt im Rahmen der Erfindung, dass die sicheren Netzwerke in der übergeordneten Netzwerkstruktur in einer Ringstruktur angeordnet werden. Es versteht sich, dass es sich bei der Ringstruktur um eine zweidimensionale topologische Struktur handeln kann. Zweckmäßigerweise ist das sichere Netzwerk benachbart zu dem Vorgänger und dem Nachfolger in einer Ringstruktur angeordnet. Es ist möglich, dass die übergeordnete Netzwerkstruktur, in der die sicheren Netzwerke angeordnet werden, jede beliebige topologische Struktur, beispielsweise die eines Busses, Gitters, Hyperwürfels und dergleichen, annehmen kann.

Zweckmäßigerweise wird jedem sicheren Netzwerk zumindest ein Endpunkt zugeordnet, wobei die sicheren Netzwerke über die Endpunkte in die übergeordnete Netzwerkstruktur eingebunden werden, Gemäß einer Ausführungsform ist ein Endpunkt für jedes an den Endpunkt angeschlossene sichere Netzwerk jeweils vorzugsweise einmal in die übergeordnete Netzwerkstruktur eingebunden. Es ist möglich, dass eine einzelne Komponente, die beispielsweise aus der Gruppe "Computer, mobiler Computer, Personal Digital Assistant" ausgewählt ist über einen eigenen Endpunkt verfügt und in einer bevorzugten Ausführungsform direkt in die übergeordnete Netzwerkstruktur eingebunden ist. Mit anderen Worten ist die einzelne Komponente über einen komponentenseitigen Endpunkt in die übergeordnete Netzwerkstruktur eingebunden. Gemäß einer Ausführungsform des erfindungsgemäßen Vefahrens ist eine Einheit bzw. Überstruktur über einen Endpunkt in die übergeordnete Netzwerkstruktur eingebunden. Der Endpunkt ist vorzugsweise eine Schnittstelle bzw. Verbindungsstelle, mit der das sichere Netzwerk an die übergeordnete Netzwerkstruktur angebunden ist. Zweckmäßigerweise ist der Endpunkt ein Gateway und vorzugsweise ein Sicherheitsgateway. Es empfiehlt sich, dass der Endpunkt ein Kommunikationsprotokoll aufweist, mit dem eine Nachrichtenübermittlung bzw. ein Nachrichtenstrom von einem sicheren Netzwerk in die übergeordnete Netzwerkstruktur bzw. von der übergeordneten Netzwerkstruktur in das sichere Netzwerk übermittelt wird. Gemäß einer bevorzugten Ausführungsform des erfindungsgemäßen Verfahrens ist in das Kommunikationsprotokoll zumindest ein kryptografisches Verfahren implementiert. Es empfiehlt sich, dass in dem Endpunkt Informationen bzw. Daten abgelegt sind, mit denen zweckmäßigerweise eine Identifikation des Endpunktes und dem mit dem Endpunkt verbundenen sicheren Netzwerk möglich sind. Informationen bzw. Daten, die in dem Endpunkt abgelegt sind, stellen zweckmäßigerweise die Koordinaten bzw, die Adresse des Endpunktes dar, über den der Endpunkt vorzugsweise eindeutig identifizierbar und bevorzugt kontaktierbar für andere Endpunkte ist. Empfohlenermaßen sind die in den Endpunkten der inneren Netzwerke abgelegten Adressen bzw. Informationen vorzugsweise für unsichere Netzwerke außerhalb der übergeordneten Netzwerkstruktur nicht sichtbar bzw. unlesbar. Ein unsicheres Netzwerk ist beispielsweise ein öffentliches Netzwerk. Mit anderen Worten verfügt der Endpunkt des inneren Netzwerks über keine öffentliche Adresse. Empfohlenermaßen ist die in dem Endpunkt des inneren Netzwerks abgelegte Adresse für ein beliebiges Netzwerk, das beispielsweise in der übergeordneten Netzwerkstruktur angeordnet sein kann und an das das innere Netzwerk nicht angeschlossen ist, nicht sichtbar. Dies meint, dass die Adresse des inneren Netzwerks nicht öffentlich ist. Zweckmäßigerweise ist ein Kontaktieren und/oder Senden von Daten von dem vorstehend beschriebenen, sicheren Netzwerk direkt an das innere Netzwerk nicht möglich. Es empfiehlt sich, dass das Kontaktieren bzw. das Senden von Daten von dem vorstehend beschriebenen, sicheren Netzwerk zu dem inneren Netzwerk ausschließlich über das sichere Netzwerk erfolgt, an welches sichere Netzwerk das innere Netzwerk angebunden ist. Gemäß einer Ausführungsform des erfindungsgemäßen Verfahrens ist es möglich, dass Daten von dem inneren Netzwerk zu dem vorstehend beschriebenen, sicheren Netzwerk in einer bevorzugten Ausführungsform über die übergeordnete Netzwerkstruktur gesendet werden können.

Vorzugsweise wird in zumindest einem Überprüfungsschritt die Verbindung des sicheren Netzwerkes zu dem weiteren sicheren Netzwerk bzw. zum dem Vorgänger und/oder dem Nachfolger überprüft, wobei das sichere Netzwerk ausschließlich dann in der übergeordneten Netzwerkstruktur verbleibt, wenn die Verbindung des sicheren Netzwerks zu dem weiteren sicheren Netzwerk bzw, Vorgänger und/oder dem Nachfolger als funktionssicher bzw. funktionsfähig detektiert wird. Es empfiehlt sich, dass der Überprüfungsschritt durch den Endpunkt durchgeführt wird. Zweckmäßigerweise sendet der Endpunkt des sicheren Netzwerkes vorzugsweise periodisch ein Signal an den Endpunkt des weiteren sicheren Netzwerkes bzw. des Vorgängers und/oder an den Endpunkt des Nachfolgers. Gemäß einer bevorzugten Ausführungsform der Erfindung wird das Signal von dem Endpunkt des weiteren sicheren Netzwerks bzw. des Vorgängers und/oder dem Endpunkt des Nachfolgers empfangen. Es empfiehlt sich, dass der Endpunkt des weiteren sicheren Netzwerks bzw. des Vorgängers und/oder der Endpunkt des Nachfolgers eine Antwort an den Endpunkt des sicheren Netzwerkes zurücksenden. Für den Fall, dass das von dem Endpunkt des sicheren Netzwerkes ausgesendete Signal mit der Antwort erwidert wird, wird die Verbindung des sicheren Netzwerkes zu dem weiteren sicheren Netzwerk bzw. dem Vorgänger und/oder dem Nachfolger als funktionssicher bzw. funktionsfähig detektiert Wird das Signal des sicheren Netzwerkes von dem Endpunkt des weiteren sicheren Netzwerkes bzw. des Vorgängers und/oder dem Endpunkt des Nachfolgers nicht bzw. nicht in einem vorgegebenen Zeitintervall beantwortet, so nimmt der Endpunkt des sicheren Netzwerkes zweckmäßigerweise, empfohlenermaßen nach einer und vorzugsweise nach einer Mehrzahl von Wiederholungen an, dass das weitere sichere Netzwerk bzw. der Vorgänger und/oder der Nachfolger nicht mehr in die übergeordnete Netzwerkstruktur eingebunden ist/sind. Es empfiehlt sich, dass der Überprüfungsschritt auch dann ausgeführt wird, wenn keine Daten übertragen werden sollen. Gemäß einer Ausführungsform des erfindungsgemäßen Verfahrens hält das sichere Netzwerk die Verbindung zu dem weiteren sicheren Netzwerk bzw, zu dem Vorgänger und/oder Nachfolger in der übergeordneten Netzwerkstruktur aufrecht. Es liegt im Rahmen der Erfindung, dass das sichere Netzwerk keine Daten bzw. Adressen anderer, sicherer Netzwerke vorhalten muss, um ein anderes, in die übergeordnete Netzwerkstruktur eingebundenes, sicheres Netzwerk aufzufinden und/oder zu kontaktieren. Zweckmäßigerweise wird ein Lokalisierungsschnitt durchgeführt, wenn Datenpakete von dem sicheren Netzwerk zu einem Zielnetzwerk gesendet werden sollen, welches Zielnetzwerk dem sicheren Netzwerk unbekannt ist.

Es liegt im Rahmen der Erfindung, dass in zumindest einem Lokalisierungsschritt ein sicheres, unbekanntes Netzwerk erfasst und in die übergeordnete Netzwerkstruktur eingefügt wird. Zweckmäßigerweise wird das sichere, unbekannte Netzwerk mit der Maßgabe in die übergeordnete Netzwerkstruktur eingefügt, dass es zwischen zwei bereits in der übergeordneten Netzwerkstruktur angeordneten, sicheren Netzwerken eingefügt wird. Vorzugsweise wird das sichere, unbekannte Netzwerk in eine ringförmige, übergeordnete Netzwerkstruktur bevorzugt benachbart zu einem vorangehenden und einem nachfolgenden sicheren Netzwerk angeordnet. Gemäß einer bevorzugten Ausführungsform des erfindungsgemäßen Verfahrens meldet sich das sichere, unbekannte Netzwerk in der übergeordneten Netzwerkstruktur an. Es liegt im Rahmen der Erfindung, dass der Endpunkt des sicheren, unbekannten Netzwerks beispielsweise aus einem Verzeichnis zumindest eine Adresse eines Endpunktes eines in die übergeordnete Netzwerkstrukturen eingebundenen sicheren Netzwerks und vorzugsweise eine Vielzahl von Adressen der Endpunkte der in der übergeordneten Netzwerkstruktur angeordneten, sicheren Netzwerke ausliest und auf diese Weise das sichere, in der übergeordneten Netzwerkstruktur angeordnete Netzwerk ermittelt, wobei die Adresse dessen Endpunkts der des Endpunkts des sicheren, unbekannten Netzwerks am ähnlichsten bzw. am nähesten ist. Gemäß einer Ausführungsform kann sich das unbekannte, sichere Netzwerk von dem Endpunkt eines sicheren, in die übergeordnete Netzwerkstruktur eingebundenen Netzwerks, welcher Endpunkt die ähnlichste Adresse aufweist, ermitteln lassen. Es hat sich bewährt, dass die Adressen der Endpunkte, die beispielsweise mit einer 32-Bit-Adresse (Internet Protocol Version 4) oder 128-Bit-Adresse (Intemet Protocol Version 6) angegeben sind, nach aufsteigenden Adressen aufgelistet bzw. sortiert werden. Die Größe der Adressen wird dabei empfohlenermaßen aus den von der ersten Dezimalzahl bis zur vierten Dezimalzahl bestimmt. Empfohlenermaßen vergleicht der Endpunkt des sicheren, unbekannten Netzwerks die eigene Adresse in einer bevorzugten Ausführungsform des erfindungsgemäßen Verfahrens ausgehend von der ersten Dezimalzahl bis zur vierten Dezimalzahl zweckmäßigerweise mit den Adressen der Endpunkte der in der übergeordneten Netzwerkstruktur angeordneten, sicheren Netzwerke. Es liegt im Rahmen der Erfindung, dass der Endpunkt die ähnlichste bzw. die am nähesten liegenden Adressen aufweisen, dessen Adresse ausgehend von der ersten Dezimalzahl hin zur vierten Dezimalzahl die geringste Abweichung bzw. Differenz zu der Adresse des Endpunkts des sicheren, unbekannten Netzwerks aufweist. Empfohlenermaßen ist die Adresse des Endpunktes des Vorgängers kleiner als die Adresse des Endpunktes des sicheren, unbekannten Netzwerks. Es empfiehlt sich, dass der Endpunkt des sicheren, unbekannten Netzwerks zumindest eine Austauschanfrage an den Endpunkt des Vorgängers aussendet. Gemäß einer Ausführungsform des erfindungsgemäßen Verfahrens wird von dem Endpunkt des sicheren, unbekannten Netzwerks die Austauschanfrage an den Endpunkt eines beliebigen anderen sicheren Netzwerks in der übergeordneten Netzwerkstruktur ausgesendet. Vorzugsweise leitet der Endpunkt des beliebigen anderen sicheren Netzwerks die Austauschanfrage über die übergeordnete Netzwerkstruktur und/oder das Transportnetz an mindestens einen Endpunkt eines sicheren Netzwerks weiter, welches sichere Netzwerk für das sichere, unbekannte Netzwerk den Vorgänger vorzugsweise gemäß der Reihenfolge der Adressen der Endpunkte der sicheren Netzwerke in der übergeordneten Netzwerkstruktur darstellt. Es ist möglich, dass von dem Endpunkt des sicheren, unbekannten Netzwerks eine Austauschanfrage an den Endpunkt des vorangehenden Netzwerks ausgesendet wird, wobei dieses Signal von dem Endpunkt des vorangehenden Netzwerks bzw. Vorgängers über die übergeordnete Ringstruktur vorzugsweise an den Endpunkt des nachfolgenden Netzwerks bzw. des Nachfolgers übermittelt wird. Es liegt im Rahmen der Erfindung, dass von dem Endpunkt des vorangehenden Netzwerks und/oder dem Endpunkt des nachfolgenden Netzwerks ein Antwortsignal an den Endpunkt des sicheren, unbekannten Netzwerks zurückgesendet wird. Gemäß einer besonders bevorzugten Ausführungsform des erfindungsgemäßen Verfahrens erfolgt die Beantwortung des Signals, das von dem Endpunkt des sicheren, unbekannten Netzwerks ausgesendet wurde, durch den Endpunkt des vorangehenden Netzwerks und/oder den Endpunkt des nachfolgenden Netzwerks mit der Maßgabe, dass eine sichere Verbindung zwischen dem Endpunkt des sicheren, unbekannten Netzwerks und dem Endpunkt des vorangehenden Netzwerks und/oder dem Endpunkt des nachfolgenden Netzwerks erfolgen kann. Zweckmäßigerweise werden in dem Lokalisierungsschritt Verbindungen zwischen den Endpunkten der sicheren Netzwerke entlang der übergeordneten Netzwerkstrukturen und vorzugsweise entlang der topologischen Struktur generiert.

Gemäß einer Ausführungsvariante des erfindungsgemäßen Verfahrens wird zumindest ein weiterer Lokalisierungsschritt ausgeführt, wobei in den Endpunkten abgelegte Informationen über die Verbindungen zwischen den Endpunkten ausgetauscht werden. Empfohlenermaßen sind in den Endpunkten zumindest Adressen bzw. Koordinaten gespeichert, mit denen ein sicheres Netzwerk in der übergeordneten Netzwerkstruktur identifizierbar bzw. kontaktierbar ist. Es empfiehlt sich, dass der Endpunkt des sicheren Netzwerks in dem weiteren Lokalisierungsschritt zumindest ein Anfragesignal an den Vorgänger und/oder den Nachfolger bzw. ein sicheres, unbekanntes Netzwerk sendet, auf welches Anfragesignal der Vorgänger und/oder der Nachfolger und/oder das sichere, unbekannte Netzwerk ein Erwiderungssignal sendet. Vorzugsweise weist das Erwiderungssignal zumindest die Adresse bzw. die Koordinaten des dem betreffenden Netzwerk zugeordneten Endpunkts auf. In einer besonders bevorzugten Ausführungsform des erfindungsgemäßen Verfahrens enthält das Erwiderungssignal zumindest die Adresse bzw. die Koordinaten von Netzwerken, die benachbart zu dem Vorgänger und/oder dem Nachfolger und/oder dem sicheren, unbekannten Netzwerk in der übergeordneten Netzwerkstruktur angeordnet sind. Auf diese Weise werden die Adressen bzw. die Koordinaten der in der übergeordneten Netzwerkstruktur angeordneten Netzwerke zwischen den einzelnen Endpunkten bzw. Netzwerken ausgetauscht und vorzugsweise in den Endpunkten der sicheren Netzwerke gespeichert. Empfohlenermaßen erfolgt eine Kontrolle der in dem weiteren Lokalisierungsschritt zwischen den Endpunkten ausgetauschten Adressen bzw. Koordinaten periodisch in dem Überprüfungsschritt.

Zweckmäßigerweise werden die Informationen über die Verbindungen zwischen den Endpunkten mit der Maßgabe ausgetauscht, dass die Verbindung zwischen den Netzwerken umstrukturiert bzw. variiert und/oder dass die Länge der Verbindungen optimiert wird. Zweckmäßigerweise werden die Verbindungen zwischen den sicheren Netzwerken in der übergeordneten Netzwerkstruktur mit der Maßgabe umstrukturiert, dass zusätzliche Verbindungen zwischen den in der übergeordneten Netzwerkstruktur angeordneten sicheren Netzwerken ausgebildet werden. Die Umstrukturierung bzw. Optimierung der Verbindungen in der übergeordneten Netzwerkstruktur erfolgt vorzugsweise proaktiv, wobei zweckmäßigerweise zusätzliche Verbindungen zwischen sicheren Netzwerken bevorzugt aufgebaut werden, die nahe beieinander in dem Transportnetz angeordnet sind um beispielsweise die Geschwindigkeit der Datenübermittlung in der übergeordneten Netzwerkstruktur zu erhöhen. Es ist möglich, dass zwischen zwei sicheren Netzwerken zumindest eine Verbindung zum Datentransport entlang der übergeordneten Netzwerkstruktur und vorzugsweise zumindest zwei Verbindungen zum Datentransport vorhanden sind. Es liegt im Rahmen der Erfindung, dass eine Auswahl der Verbindungen zum Datentransport folgt. Die Verbindungen, über die Daten von einem sicheren Netzwerk zu einem anderen sicheren Netzwerk übermittelt werden, werden auch als Wege bezeichnet, so dass zweckmäßigerweise eine Wegewahl für den Datenverkehr möglich ist, um beispielsweise eine Verbindung bzw. einen Weg für die Übermittlung von Daten zu nutzen, mit dem eine optimale Verbindung zwischen zwei sicheren Netzwerken angegeben wird. Gemäß einer Ausführungsform des erfindungsgemäßen Verfahrens werden Kommunikationsbeziehungen zwischen zwei sicheren Netzwerken von den Endpunkten der sicheren Netzwerke überwacht. Wird beispielsweise durch einen beliebigen, in der übergeordneten Netzwerkstruktur angeordneten Endpunkt bzw. durch ein beliebiges sicheres Netzwerk festgestellt, dass ein sicheres Netzwerk und ein sicheres Zielnetzwerk über das beliebige sichere Netzwerk in der übergeordneten Netzwerkstruktur über das Transportnetz miteinander kommunizieren, so initiiert das beliebige Netzwerk bzw. der beliebige Endpunkt die Ausbildung einer Abkürzung zwischen dem sicheren Netzwerk und dem sicheren Zielnetzwerk bzw. deren Endpunkten insbesondere falls eine direkte Verbindung durch das Transportnetz möglich ist. Auf diese Weise wird die Effektivität der Datenübermittlung durch die übergeordnete Netzwerkstruktur zweckmäßigerweise optimiert. In einer bevorzugten Ausführungsform des erfindungsgemäßen Verfahrens erfolgt eine Optimierung der übergeordneten Netzwerkstruktur durch die Ausbildung von Abkürzungen zwischen empfohlenermaßen nicht unmittelbar nebeneinander angeordneten, sicheren Netzwerken. Es liegt im Rahmen der Erfindung, dass ein sicheres Netzwerk über eine Mehrzahl von Vorgängern und/oder eine Mehrzahl von Nachfolgern verfügt. Es empfiehlt sich, dass die Endpunkte bzw. die sicheren Netzwerke die Stabilität der weiteren, in die übergeordnete Netzwerkstruktur eingebundenen Endpunkte bzw. sicheren Netzwerke überwachen. Stabilität meint im Rahmen der Erfindung unter anderem Informationen hinsichtlich der Erreichbarkeit, der Paketverlustrate, der Verweildauer und der verfügbaren Ressourcen eines Endpunktes bzw. eines sicheren Netzwerkes. Es liegt im Rahmen der Erfindung, dass die beobachteten Stabilitätsinformationen das Transportnetz zwischen den einzelnen Endpunkten bzw. sicheren Netzwerken ausgetauscht und bevorzugt gewichtet werden. Gemäß einer bevorzugten Ausführungsform des erfindungsgemäßen Verfahrens erfolgt die Gewichtung der Stabilität der einzelnen, in die übergeordnete Netzwerkstruktur eingebundenen Netzwerke dadurch, dass die Stabilitäten der einzelnen, in die übergeordnete Netzwerkstruktur eingebundenen Netzwerke miteinander in den einzelnen Endpunkten verglichen werden. Es hat sich bewährt, dass bevorzugt Verbindungen zwischen Endpunkten bzw. sicheren Netzwerken ausgebildet werden, die über eine hohe Stabilität verfügen, so dass die Stabilität der übergeordneten Netzwerkstruktur erhöht wird. Zweckmäßigerweise erfolgt ein Austausch der Stabilitätsinformationen zwischen den sicheren Netzwerken mit der Maßgabe, dass eine Optimierung bzw. Umstrukturierung der übergeordneten Netzwerkstruktur durchgeführt wird.

Gemäß einer bevorzugten Ausführungsform wird der Lokalisierungsschritt und/oder der weitere Lokalisierungsschritt mit einem Unicast-Paket ausgeführt. Es liegt im Rahmen der Erfindung, dass ein sicheres, in der übergeordneten Netzwerkstruktur angeordnetes Netzwerk zumindest ein anderes sicheres Netzwerk kontaktiert. In einer bevorzugten Ausführungsform erfolgt die Durchführung des Lokalisierungsschritts und/oder des weiteren Lokalisierungsschritts ausschließlich über ein Unicast-Paket. Das heißt, dass keine spezifische Netzwerkunterstützung, wie beispielsweise Multicast, Anycast oder Broadcast, benötigt wird.

Es empfiehlt sich, dass in dem Transportschritt von dem sicheren Netzwerk zumindest ein Kontaktaufnahmesignal an das Zielnetzwerk ausgesendet wird und dass das Zielnetzwerk zumindest ein Empfangssignal an das sichere Netzwerk sendet. Vorzugsweise wird das Kontaktaufnahmesignal bzw. das Empfangssignal über Verbindungen in der übergeordnete Netzwerkstruktur von dem sicheren Netzwerk zu dem Zielnetzwerk bzw. von dem Zielnetzwerk zu dem sicheren Netzwerk übertragen. Zweckmäßigerweise werden im Anschluss die Daten von dem sicheren Netzwerk an das Zielnetzwerk gesendet, wenn das Empfangssignal des Zielnetzwerks mit dem von dem sicheren Netzwerk erwarteten Empfangssignal übereinstimmt. Es ist möglich, dass das sichere Netzwerk kein Empfangssignal als Antwort erhält. Es liegt im Rahmen der Erfindung, dass der Lokalisierungsschritt einmal und vorzugsweise wiederholt durchgeführt wird, wenn das sichere Netzwerk nach dem Aussenden des Kontaktaufnahmesignals keine Antwort erhält. Gemäß einer Ausführungsform des erfindungsgemäßen Verfahrens, sendet das sichere Netzwerk nach der Durchführung des Lokalisierungsschritts vorzugsweise ein weiteres Kontaktaufnahmesignal an das Zielnetzwerk aus.

Vorzugsweise werden die Daten verschlüsselt von dem sicheren Netzwerk zu dem Zielnetzwerk übermittelt. Vorzugsweise werden die von dem sicheren Netzwerk versendeten Daten in dem zugehörigen Endpunkt verschlüsselt, bevorzugt an den Endpunkt des Zielnetzwerkes übermittelt, empfohlenermaßen in dem Endpunkt des Zielnetzwerkes entschlüsselt und zweckmäßigerweise an eine Komponente in dem Zielnetzwerk weitergeleitet. Gemäß einer besonders bevorzugten Ausführungsform des erfindungsgemäßen Verfahrens wird durch das Verfahren eine Security Policy Database (SPD) vorzugsweise für die Verwendung von IPsec-Diensten konfiguriert, von welcher Security Association abgeleitet werden, die für die Verschlüsselung von Daten verwendet werden, welche Daten aus dem sicheren Netzwerk in das Zielnetzwerk gesendet werden.

Es ist möglich, dass sichere Netzwerke im Transportnetz nicht direkt zueinander benachbart angeordnet sind und nicht über direkte Verbindungen, beispielsweise durch andere unsichere Netzwerke kommunizieren können. Empfohlenermaßen ist in diesem Fall nur eine Kommunikation über ein sicheres Netzwerk möglich, welches sichere Netzwerk in der übergeordneten Netzwerkstruktur angeordnet ist. Zur Erhöhung der Sicherheit hat es sich bewährt, nichtöffentliche Adressen zu nutzen, die durch unsichere Netzwerke nicht bestimmt bzw. erkannt und nicht kontaktiert werden können. Gemäß einer bevorzugten Ausführungsform wird bei der Durchführung des Lokalisierungsschritts ein Tunnel und/oder eine virtuelle Verbindung zwischen den kommunizierenden, sicheren Netzwerken aufgebaut. Zweckmäßigerweise verlaufen diese Tunnel und/oder virtuellen Verbindungen entlang der topologischen Struktur der übergeordneten Netzwerkstruktur und werden anschließend empfohlenermaßen umstrukturiert bzw. optimiert.

Der Erfindung liegt die Erkenntnis zugrunde, dass mit dem erfindungsgemäßen Verfahren einfach und funktionssicher Konfigurationen für den sicheren und problemlosen Transport von Daten bzw. Datenaustausch zwischen zwei Netzwerken eingerichtet werden können. Dazu werden keine besonderen Vermittlungsverfahren wie Multicast, Broadcast oder Anycast benötigt und das Verfahren ist somit in allen gängigen Datennetzwerken einsetzbar. Weiterhin werden Daten zwischen zwei Netzwerken mit optimaler Sicherheit transportiert. Es hat sich gezeigt, dass die transportierten Daten effektiv vor einem Angriff von außen geschützt sind. Das erfindungsgemäße Verfahren ist auf beliebige Netzwerke anwendbar und lässt sich unter dem Einsatz etablierter Standards durchführen. Weiterhin liegt der Erfindung die Erkenntnis zugrunde, dass zusätzliche, sichere Netzwerke sowie Netzwerke, die beispielsweise mobile und temporär in die übergeordnete Netzwerkstruktur einzubindende Komponenten enthalten, auf überraschend einfache Weise in die erfindungsgemäße übergeordnete Netzwerkstruktur integrierbar sind. Dazu müssen in den Endpunkten des hinzuzufügenden, sicheren Netzwerkes lediglich zwei Konfigurationen für sichere Tunnel (beim Einsatz mit IPsec entspricht dies den SPD-Einträgen) automatisch erzeugt werden, damit das hinzugefügte Netzwerk von den anderen Endpunkten erfasst werden kann. Ein weiterer Vorteil des erfindungsgemäßen Verfahrens besteht darin, dass beim Entfernen eines Endpunktes eines Netzwerks lediglich eine Verbindung repariert werden muss. Der Erfindung liegt insoweit die Erkenntnis zugrunde, dass ein schneller Positionswechsel der sicheren Netzwerke in der übergeordneten Netzwerkstruktur zur Strukturoptimierung möglich ist. Fernerhin ist ein schneller Positionswechsel, beispielsweise aus Mobilitätsgründen, eines sicheren Netzwerkes in einer Überstruktur möglich, ohne dass bei diesem Positionswechsel die anderen sicheren Netzwerke, die in die übergeordnete Netzwerkstruktur eingebunden sind, von diesem Kenntnis erlangen müssen.

Wesentlich an der Erfindung ist, dass mit dem erfindungsgemäßen Verfahren eine wirkungsvolle Kompensation bzw. eine funktionssichere Reorganisation der übergeordneten Netzwerkstruktur insbesondere beim Ausfall von Endpunkten und/oder sicheren Netzwerken erfolgt. Selbst wenn mehr als ein Viertel der in der übergeordneten Netzwerkstruktur eingebundenen Endpunkte simultan entfernt wird, ist eine Kompensation des Wegfalls der Endpunkte innerhalb weniger Sekunden möglich. Das erfindungsgemäße Verfahren erweist sich darüber hinaus als optimal betriebssicher bzw. störungsunanfällig, da bedingt durch den dezentralisierten Aufbau der Wegfall einzelner Endpunkte problemlos kompensiert werden kann. Fernerhin ist der Verwaltungsaufwand bzw. der Betreuungsaufwand auch bei großen übergeordneten Netzwerkstrukturen überraschend gering. Es ist darauf hinzuweisen, dass sich das erfindungsgemäße Verfahren durch einen hohen Automatisierungsgrad auszeichnet, durch den fehlerträchtige manuelle Eingriffe bei der Durchführung des erfindungsgemäßen Verfahrens zuverlässig vermieden werden. Erforderliche manuelle Eingriffe beschränken sich auf die Ausgabe von Kommunikationsberechtigungen an die Endpunkte, die in die übergeordnete Netzwerkstruktur integriert werden sollen.

Nachfolgend wird die Erfindung anhand einer lediglich ein Ausführungsbeispiel darstellenden Zeichnung detailliert erläutert. Es zeigen:
- Fig. 1: ein Transportnetz zur Durchführung des erfindungsgemäßen Verfahrens,
- Fig. 2: eine gemäß des erfindungsgemäßen Verfahrens erstellte übergeordnete Netzwerkstruktur,
- Fig. 3: eine schematische Darstellung des Lökalisierungsschritts des erfindungsgemäßen Verfahrens,
- Fig. 4: eine schematische Darstellung des weiteren Lokalisierungsschritts des erfindungsgemäßen Verfahrens und
- Fig. 5: einen schematischen Transportschritt des erfindungsgemäßen Verfahrens.

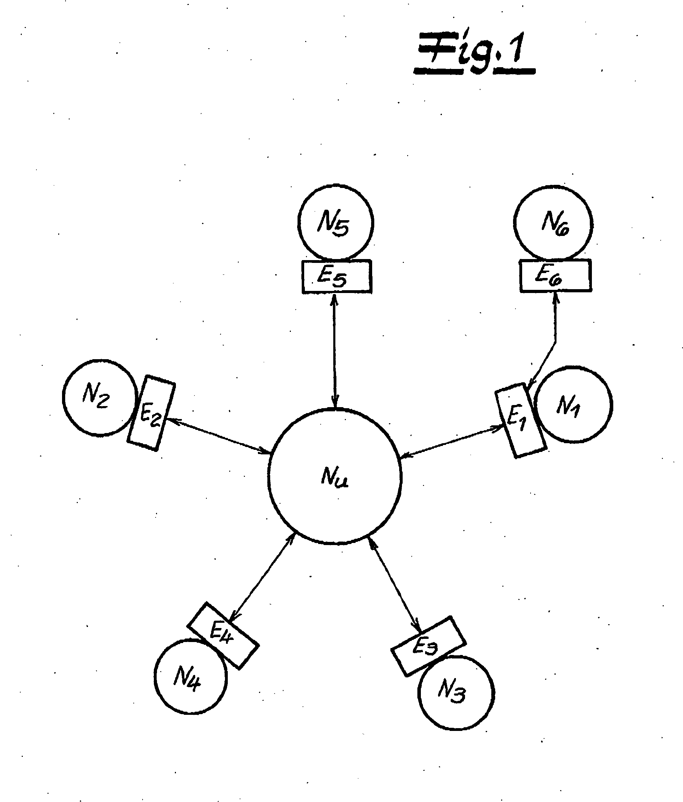

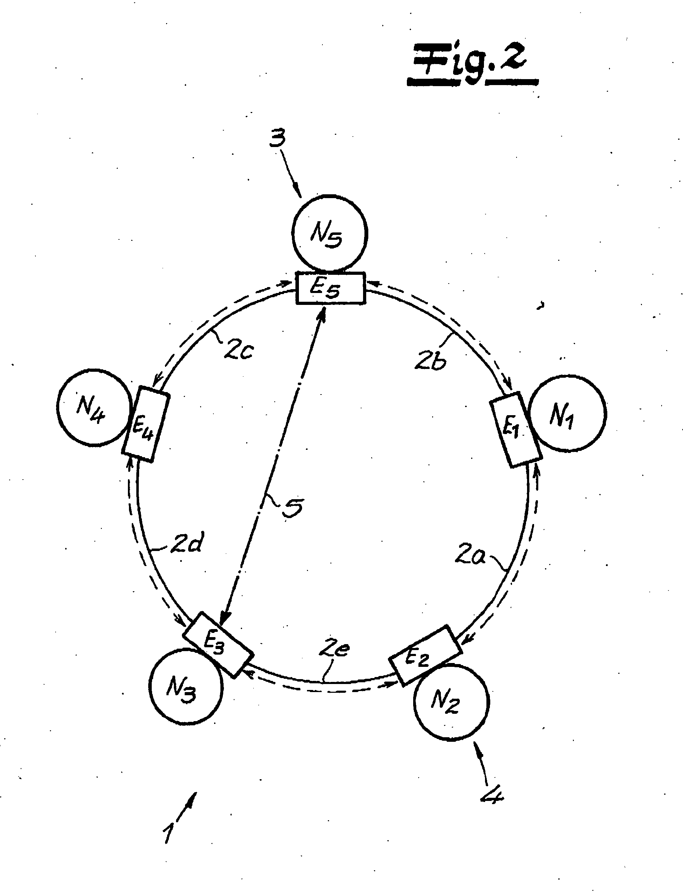

In Fig. 1 ist eine Struktur eines Transportnetzes dargestellt, mit der das erfindungsgemäße Verfahren ausführbar ist., Vorzugsweise und im Ausführungsbeispiel gemäß Fig. 1 sind die sicheren Netzwerke N₁, N₂, N₃, N₄ und N₅ über ihre Endpunkte E₁, E₂, E₃, E₄ und E₅ über ein unsicheres Netzwerk N_{U} verbunden. Gemäß Fig. 1 ist der Endpunkt E₆ des sicheren Netzwerkes N₆ in dem Netzwerk N₁ angeordnet. Vorzugsweise und im Ausführungsbeispiel nach Fig. 1 verfügt der Endpunkt N₆ über keine öffentliche Adresse. Das Netzwerk N₆ stellt gemäß Fig. 1 ein inneres Netzwerk dar. In Fig. 2 ist eine vorzugsweise und in dem Ausführungsbeispiel ringförmig ausgestaltete übergeordnete Netzwerkstruktur 1 dargestellt. Die Netzwerke N₁, N₂, N₃, N₄ und N₅ sind in dem Ausführungsbeispiel über die den Netzwerken zugehörigen Endpunkte E₁, E₂, E₃, E₄ und E₅ in die übergeordnete Netzwerkstruktur 1 eingebunden. Lediglich das sichere Netzwerk N₆ mit dem Endpunkt E₆ ist noch nicht in die übergeordnete Netzwerkstruktur 1 eingebunden. Zweckmäßigerweise und in dem Ausführungsbeispiel sind in den Endpunkten E₁ bis E₅ die Koordinaten bzw. Werte gespeichert, mit denen die Netzwerke E₁ bis E₅ in der übergeordneten Netzwerkstruktur 1 eindeutig identifizierbar sind. In dem Ausführungsbeispiel verfügen die Endpunkte E₁ bis E₅ über einen IPsec-Dienst, der einen vertraulichen und autentifizierten Transport von IP-Paketen gewährleistet.

Gemäß Fig. 2 sind die Endpunkte E₁ des Netzwerks N₁ und E₂ des Netzwerks N₂ über einen sicheren Tunnel 2a miteinander verbunden. Weiterhin ist das Netzwerk N₁ über den Endpunkt E₁ und den sicheren Tunnel 2b mit dem Endpunkt E₅ des sicheren Netzwerks N₅ verbunden. Der Endpunkt E₄ ist gemäß Fig. 2 über den sicheren Tunnel 2c mit dem Endpunkt E₅, der Endpunkt E₃ über den sicheren Tunnel 2d mit dem Endpunkt E₄ und der Endpunkt E₂ über den sicheren Tunnel 2e mit dem Endpunkt E₃ verbunden.

In dem Ausführungsbeispiel stellt das Netzwerk N₅ den Nachfolger 3 des Netzwerks N₁ und das Netzwerk N₂ den Vorgänger 4 des Netzwerks N₁ dar. Zweckmäßigerweise übermittelt der Endpunkt E₁ in einem Überprüfungsschritt periodisch ein Signal an den Endpunkt E₅ des Nachfolgers 3 und den Endpunkt E₂ des Vorgängers 4. Gemäß des Ausführungsbeispiels übermitteln alle Endpunkte periodisch Signale, um Ausfälle zu detektieren. In dem Ausführungsbeispiel nach Fig. 2 ist parallel zu der ringförmigen übergeordneten Netzwerkstruktur 1 eine Abkürzung 5 zwischen den Endpunkten E₃ und E₅ eingerichtet, welche Endpunkte in der übergeordneten Netzwerkstruktur nicht direkt benachbart zueinander angeordnet sind.

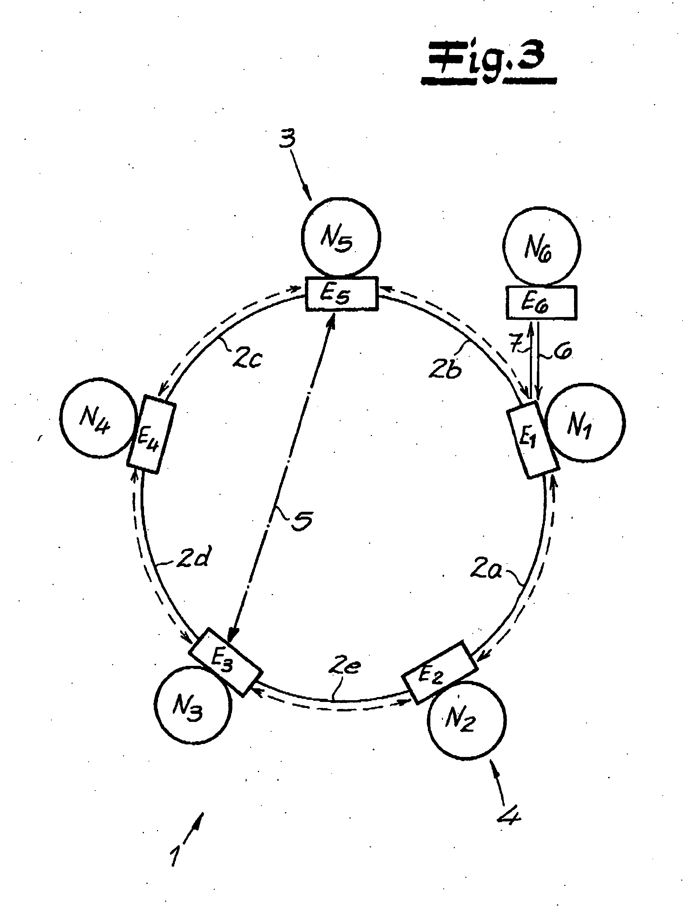

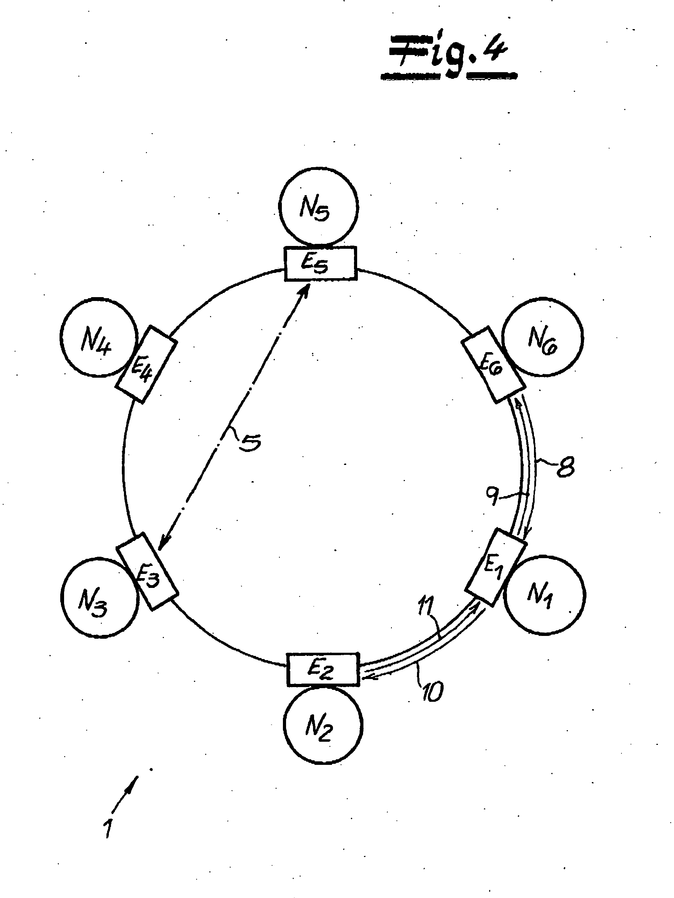

In Fig. 3 ist ein Lokalisierungsschritt dargestellt, in dem ein zusätzliches sicheres Netzwerk N₆ mit einem zugehörigen Endpunkt E₆ erfasst und in die übergeordnete Netzwerkstruktur 1 eingebunden. Um sich einzufügen, muss der Endpunkt E₆ zunächst einen beliebigen anderen Endpunkt kontaktieren, welcher beliebige andere Endpunkte bereits in die übergeordnete Netzwerkstruktur 1 eingebunden ist. Da das Netzwerk N₆ ein inneres Netzwerk ist, kann es den Endpunkt E₁ ermitteln und eine sichere Verbindung gemäß Fig. 3 zu dem Endpunkt E₁ aufbauen. In dem Lokalisierungsschritt kontaktiert der Endpunkt E₆ den Endpunkt E₁, was in der Fig. 3 durch den Pfeil 6 dargestellt ist. Vorzugsweise und in dem Ausführungsbeispiel übermittelt der Endpunkt E₆ eine Austauschanfrage entlang der übergeordneten Netzwerkstruktur 1 an den Endpunkt E₁. In dem Ausführungsbeispiel nach Fig. 3 sendet den Endpunkt E₁ über die ringförmige, übergeordnete Netzwerkstruktur 1 eine weitere Austauschanfrage an den Endpunkt E₅, dessen Adresse in dem Ausführungsbeispiel der von E₆ am ähnlichsten ist In dem Ausführungsbeispiel stellt der Endpunkt E₁ fest, dass er selbst in Bezug auf die ringförmige übergeordnete Netzwerkstruktur 1 verantwortlich ist, da sich das sichere Netzwerk N₆ genau zwischen dem Netzwerk N₁ und seinem Nachbarn N₅ einfügen muss. Nach Fig. 3 sendet der Endpunkt E₁ ein Antwortsignal an den Endpunkt E₆, was durch den Pfeil 7 dargestellt ist. Dieses Antwortsignal enthält die Koordinaten bzw. die Adresse, die die benachbarten sicheren Netzwerke N₁ und N₅ des sicheren Netzwerkes N₆ darstellen. In Fig. 4 ist dargestellt, dass die Endpunkte E₁ und E₆ bzw. E₆ und E₅ über einen sicheren Tunnel miteinander verbunden sind. In dem Ausführungsbeispiel werden die sicheren Tunnel entlang der übergeordneten Netzwerkstrukturen 1 ausgebildet, so dass der Tunnel zwischen den Endpunkten E₁ und E₆ direkt ausgebildet wird. Der Tunnel zwischen den Endpunkten E₅ und E₆ verläuft physisch über den Endpunkt E₁. Vorzugsweise und in dem Ausführungsbeispiel gemäß Fig. 4 wird auf diese Weise trotz der komplexen Struktur des Transportnetzes wieder eine ringförmige, übergeordnete Netzwerkstruktur 1 ausgebildet.

Vorzugsweise und in dem Ausführungsbeispiel führen die in der übergeordneten Netzwerkstruktur 1 angeordneten Endpunkte einen weiteren Lokalisierungsschritt aus, in dem die Informationen hinsichtlich der Koordinaten der einzelnen Endpunkte zwischen den in der übergeordneten Netzwerkstruktur 1 angeordneten Endpunkten ausgetauscht werden, wenn zwischen den einzelnen Endpunkten noch kein Tunnel und/oder keine virtuelle Verbindung errichtet wurde. Weiterhin ist in Fig. 4 die Kommunikation zwischen den Endpunkten E₆ und E₃ dargestellt, die mit dem Ziel erfolgt, eine Verbindung zur Übertragung von Daten zwischen dem Netzwerk N₆ und dem Netzwerk N₃ aufzubauen. Gemäß Fig. 4 sendet beispielsweise der Endpunkt E₆ ein Anfragesignal an den Endpunkt E₁, was in dem Ausführungsbeispiel gemäß Fig. 4 durch den Pfeil 8 dargestellt ist. Vorzugsweise und in dem Ausführungsbeispiel nach Fig. 4 leitet der Endpunkt E₁ das Anfragesignal entlang der übergeordneten Netzwerkstruktur an den Endpunkt E₂ (Pfeil 10) weiter. Der Übersichtlichkeit halber ist in Fig. 4 nicht dargestellt, dass der Endpunkt E₂ das Anfragesignal des Endpunkts E₆ an den Endpunkt E₃ des Zielnetzwerks N₃ weiterleitet. Weiterhin ist in Fig. 4 nicht dargestellt, dass der Endpunkt E₃ ein Erwiderungssignal generiert. Das Erwiderungssignal wird über die übergeordnete Netzwerkstruktur an den Endpunkt E₂ übermittelt, Der Endpunkt E₂ sendet gemäß Fig. 4 (Pfeil 11) das Erwiderungssignal an den Endpunkt E₁, der es an den Endpunkt E₆ weiterleitet. Zweckmäßigerweise und in dem Ausführungsbeispiel wird über den gleichen Weg ein sicherer Tunnel zwischen dem Endpunkt E₆ und dem Endpunkt E₃ aufgebaut.

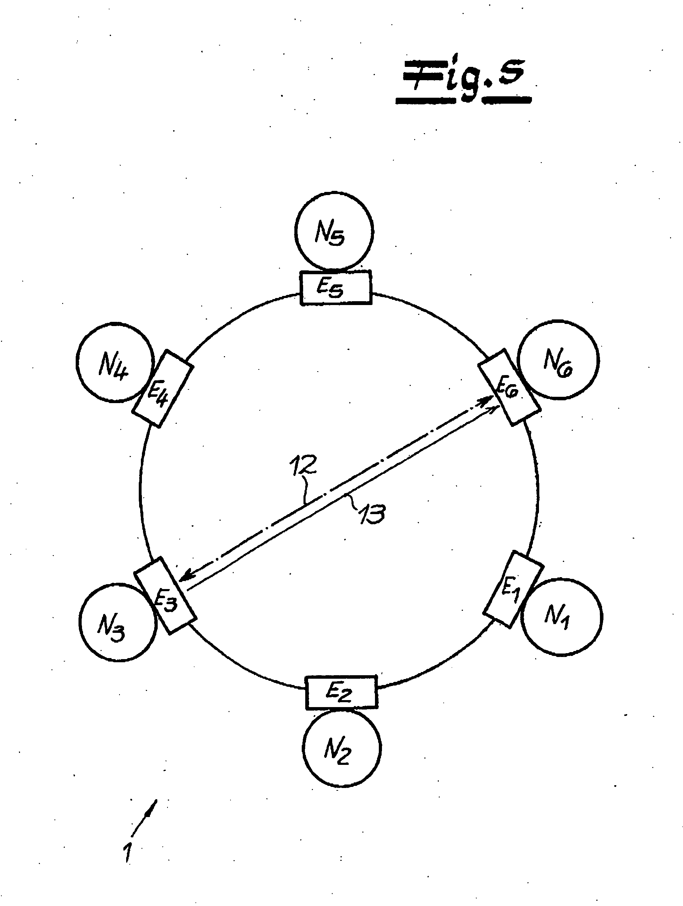

In Fig. 5 ist eine Kommunikation zwischen den Endpunkten E₆ und E₃ dargestellt, mit der Daten über eine durch eine Optimierung entstandene weitere Abkürzung 12 von dem sicheren Netzwerk N₃ zu einem Zielnetzwerk N₆ verschlüsselt übermittelt werden. Da der Endpunkt E₆ zu dem inneren Netzwerk N₆ gehört, verläuft die Abkürzung 12 im Transportnetzwerk weiterhin über den Endpunkt E₁. Gemäß Fig. 5 verläuft die Abkürzung nicht über den Endpunkt E₂, da die Endpunkte E₁ und E₃ auch direkt miteinander kommunizieren können.

## Patentansprüche

1. Endpunkt für ein dezentrales System zur sicheren Übertragung von Daten in einer übergeordneten Netzwerkstruktur, Overlay-Netzwerk, wobei das dezentrale System aus wenigstens zwei Endpunkten gebildet wird,
bei dem der Endpunkt dazu ausgestaltet ist:
- zu versendende Daten zu verschlüsseln und empfangene Daten zu entschlüsseln
- bestimmt durch die Vorgänger- und Nachfolgerbeziehung der ihm zugeordneten sicheren Netze, in der übergeordneten Netzwerkstruktur sich benachbart zu anderen Endpunkten anzuordnen,
- in einem Initialisierungsschritt zumindest eine sichere Verbindung für einen Datentransport von dem Endpunkt zu einem anderen Endpunkt herzustellen,
- in einem Lokalisierungsschritt, wenn der Endpunkt (E6) nicht in die übergeordnete Netzwerkstruktur eingebunden ist, einen anderen Endpunkt (E5) zu ermitteln, welcher bereits in die übergeordnete Netzwerkstruktur eingebunden ist; wobei der Endpunkt ausgestaltet ist, in dem Lokalisierungsschritt eine Austauschanfrage an einen bereits verbundenen Endpunkt (E1), der bereits Teil der übergeordneten Netzwerkstruktur ist, zu senden, um eine sichere Verbindung zu dem zu ermittelnden Nachbarn (E5) aufzubauen,
- bei einer empfangenen Austauschanfrage, wenn der Endpunkt in die übergeordnete Netzwerkstruktur bereits eingebunden ist, zu prüfen ob der Endpunkt (E1) den Vorgängen des Endpunktes (E6), der eine Austauschanfrage initialisiert hat, gemäß der Reihenfolge der Adressen der Endpunkte in der übergeordneten Netzwerkstruktur darstellt, und deshalb für die Einfügung des Endpunktes (E6), der eine Austauschanfrage initialisiert hat zuständig ist, und
- im Falle der Nichtzuständigkeit die Austauschanfrage weiter entlang der übergeordneten Netzwerkstruktur zu einem benachbarten Endpunkt (E5) zu schicken,
- im Falle der Zuständigkeit ein Antwortsignal zu senden, welches die Adressen der Endpunkte (E1, E5) enthält, zwischen welchen der Endpunkt (E6), der eine Austauschanfrage initialisiert hat, einzufügen ist,
- bei Empfang eines Antwortsignals, welches an einem Endpunkt (E6) gerichtet ist, wenn der Endpunkt nicht in die übergeordnete Netzwerkstruktur eingebunden ist und eine Austauschanfrage initialisiert hat, eine jeweils eine sichere Verbindung zu den in dem Antwortsignal enthaltenen Endpunkten (E1, E5) aufzubauen, und
- in einem Transportschritt Daten zu einem Endpunkt eines Zielnetzwerkes zu übertragen.

2. Endpunkt nach Anspruch 1, bei dem der Endpunkt dazu ausgestaltet ist, die sichere Verbindung entweder direkt zu den im Antwortsignal enthaltenen Endpunkten aufzubauen oder die sichere Verbindung entlang dem Pfad der Antwortnachricht zu den im Antwortsignal enthaltenen Endpunkten aufzubauen.

3. Endpunkt nach Anspruch 2, bei dem der Endpunkt dazu ausgestaltet ist, dass der Endpunkt beim Lokalisierungsschritt in das Antwortsignal die Adressen von Netzwerken, die benachbart zu dem Vorgänger und/oder Nachfolger und/oder einem sicheren, unbekannten Netzwerk in einer übergeordneten Netzwerkstruktur angeordnet sind, einfügt.

4. Endpunkt (E6) nach Anspruch 1, bei dem der Endpunkt dazu vorgesehen ist für den Lokalisierungsschritt ein Unicast-Paket zu verwenden.

5. Endpunkt (E6) nach einem der Ansprüche 1 bis 4, bei dem der Endpunkt des Weiteren dazu ausgestaltet ist:
- zum Aufbau einer Verbindung zwischen einem Endpunkt (E6) zu einem anderen Endpunkt (E3) für eine Übertragung von Daten ein Anfragesignal über die übergeordnete Netzwerkstruktur zu senden,
- bei Empfang eines Anfragesignals über die übergeordnete Netzwerkstruktur, welches nicht an den empfangenen Endpunkt gerichtet ist, dieses Anfragesignal weiterzuleiten,
- bei Empfang eines Anfragesignals, welches an den empfangenden Endpunkt gerichtet ist, ein an den das Anfragesignal initiierenden Endpunkt ein Erwiderungssignal zu senden,
- bei Empfang eines Erwiderungssignals, welches nicht an den empfangenden Endpunkt gerichtet ist, das Erwiderungssignal über die übergeordnete Netzwerkstruktur weiterzusenden,
- beim Empfang eines Erwiderungssignals welches an den empfangenden Endpunkt gerichtet ist, eine sichere Verbindung zwischen dem Endpunkt und dem anderen Endpunkt aufzubauen.

6. Endpunkt (E2) nach einem der Ansprüche 1 bis 5, bei dem der Endpunkt (E2) des Weiteren dazu ausgestaltet ist:
- in einem Überprüfungsschritt Signale an einen Vorgänger (E1) und einem Nachfolger (E3) zu senden,
- im Falle, dass der Endpunkt ein Überprüfungssignal eines anderen Endpunkts empfängt, ein Antwortsignal zurückzusenden,
- wird das Signal nicht bzw. nicht in einem vorgegebenen Zeitintervall beantwortet, so nimmt der Endpunkt (E2) an, dass das weitere sichere Netzwerk bzw. der Vorgänger und/oder der Nachfolger nicht mehr in die übergeordnete Netzwerkstruktur eingebunden ist/sind und repariert die Verbindung.

7. Endpunkt nach einem der Ansprüche 1 bis 6, bei dem der Endpunkt des Weiteren dazu ausgestaltet ist Informationen über Verbindungen zwischen Endpunkten für den Zweck einer Umstrukturierung auszutauschen, wobei eine durch eine Optimierung entstandene Abkürzung (12) bevorzugt über zusätzliche Verbindungen aufgebaut werden, die nahe beieinander in einem Transportnetzwerk angeordnet sind.

8. Endpunkt nach einem der Ansprüche 1 bis 7, bei dem der Endpunkt des Weiteren dazu ausgestaltet ist, die Kommunikation zwischen dem Endpunkt und einem anderen Endpunkt zu überwachen und, falls im Transportnetzwerk eine direkte Kommunikation zwischen dem Endpunkt und dem anderen Endpunkt möglich ist, die Ausbildung einer Abkürzung zwischen dem Endpunkt und dem anderen Endpunkt zu initialisieren.

9. Endpunkt nach einem der Ansprüche 1 - 8, bei dem der Endpunkt (E1) dazu vorgesehen ist, als Schnittstelle zu einem am Endpunkt angeschlossenen Netzwerk (N1) zu dienen, wobei im Endpunkt (E1) Daten abgelegt sind, mit denen eine eindeutige Identifikation des Endpunktes (E1) und des mit dem Endpunkt (E1) verbundenen Netzwerkes (N1) ermöglicht wird.

10. Endpunkt nach Anspruch 9, bei dem der Endpunkt dazu vorgesehen ist, für die die im Endpunkt abgelegten Daten, mit denen eine eindeutige Identifikation des Endpunktes (E1) und des mit dem Endpunkt (E1) verbundenen Netzwerkes (N1) ermöglicht wird, nichtöffentliche Adressen zu verwenden.

11. Endpunkt nach einem der Ansprüche 1-10, bei dem ein Endpunkt derart ausgestaltet ist, dass wenn der Endpunkt sich in einem sicheren Netz eines anderen Endpunktes befindet, aber im Transportnetz zu dem anderen Endpunkt nicht direkt benachbart ist, der Endpunkt eine Kommunikation über das sichere Netzwerk herstellt, wobei das sichere Netzwerk in dem übergeordneten Netz angeordnet wird.

12. Endpunkt nach einem der Ansprüche 1-11, bei dem der Endpunkt dazu vorgesehen ist, die Stabilität weiterer, in dem übergeordneten Netzwerk eingebundener Endpunkte zu überwachen, Informationen hinsichtlich der Stabilität auszutauschen und zu vergleichen, um bevorzugt Verbindungen zwischen Endpunkten hoher Stabilität auszubilden.

13. Endpunkt nach einem der Ansprüche 1-12, bei der der Endpunkt ein Gateway, vorzugsweise ein Sicherheitsgateway ist, bei der der Endpunkt Daten, die für ein angeschlossenes Netzwerk bestimmt sind, entschlüsselt und an eine Komponente des angeschlossenen Netzwerkes unverschlüsselt weiterleitet und/oder Daten die der Endpunkt von einer Komponente des angeschlossenen Netzwerkes unverschlüsselt enthält, vor der Weiterleitung verschlüsselt.

14. Endpunkt nach einem der Ansprüche 1 - 13, bei der der Endpunkt eine Security Policy Database vorzugsweise für die Verwendung von IPsec-Diensten enthält, die für die Verschlüsselung von Daten verwendet werden, die aus einem an dem Endpunkt angeschlossenen Netzwerk in ein Zielnetzwerk gesandt werden.

15. Dezentrales System zur gesicherten Übertragung von Daten über eine übergeordnete Netzwerkstruktur, Overlay-netzwerk, umfassend mindestens zwei Endpunkte entsprechend einem der Ansprüche 1-14, bei dem die mindestens zwei Endpunkte an ein Transportnetzwerk angeschlossen sind.

## Claims

1. End point for a decentralised system for the secure transfer of data in a higher level network structure, overlay structure, whereby the decentralised system comprises at least two end points and wherein the end point is adapted to:
- encrypt data to be sent and decrypt received data,
- be arranged in the higher level network structure neighboring other end points arranged according to the previous and subsequent relationships of the associated secure networks,
- establish in an initialisation step at least one secure connection for a data transport from the end point to another end point,
- detect another end point (E5) in a localisation step if the end point (E6) is not in the higher level network structure, the other end point (E5) being already arranged in the higher level network structure, whereby the end point is adapted in the localisation step to send an exchange query to a previously connected end point (E1), which is already part of the higher level network structure, in order to create a secure connection with the end point (E5) to be detected,
- check on a received exchange query, if the end point is already connected into the higher level network structure ,whether the end point (E1) is associated with previous one of the end point (E6), which initialised an exchange query, according to the order of the addresses of the end points in the higher level network structure, and thus is responsible for the insertion of the end point (E6), which initialised the exchange query, and
- to send the exchange query further along the higher level network structure to a neighboring end point (E5) when not responsible for the exchange query,
- to send an answer signal comprising the addresses of the end points (E1, E5) between which the end point (E6) initialising the exchange query is to be inserted in the case of responsibility,
- construct a secure connection to the end points (E1, E5) indicated in the response signal on receipt of the answer signal sent to an end point (E6) if the end point is not connected with the higher level network structure and has initialised an exchange query, and
- transferring data to an end point of a destination network in a transport step.

2. End point according to claim 1 in which the end point is adapted to construct the secure connection either directly to the end points in the response signal or to construct the secure connection along the path of the response signal to the end points indicated in the response signal.

3. End point according to claim 2 in which the end point is adapted to insert in the location step the addresses of networks in the response signal, the networks being arranged neighboring a previous one and/or a subsequent one and/or a secure unknown network in a higher level network structure.

4. End point according to claim 1 in which the end point is adapted to use a Unicast packet to use in a localisation step.

5. End point according to one of the claims 1 to 4 in which the end point is further adapted to:
- send a query signal via the higher level network structure in order to construct a connection between an end point (E6) to another end point (E3) for a transfer of data,
- pass this query signal on receipt of the query signal via the higher level network structure, which is not directed at the received end point,
- send a response signal to the end point initiating the query signal on receipt of the query signal which is directed at the receiving end point,
- pass the response signal via the higher level network on receipt of a response signal, which is not directed to the receiving end point,
- constructing a secure connection between the end point and the other end point on receipt of a response signal, which is directed at the receiving end point.

6. End point (E2) according to one of the claims 1 to 5 in which the end point is further adapted to:
- send in a verification step signals to a previous one (E1) and a subsequent one (E3),
- respond with an answer signal in the cases in which the end point receives a checking signal from another end point,
- should the signal not or not be received in a predetermined time interval, the end point (E2) assumes that the further secure network or the previous one and/or the following ones are no longer connected into the higher level network structure and repairs the connection.

7. End point according to claim 1 to 6 in which the end point is further adapted to exchange information about connections between the end points for the purpose of a restructuring, whereby a short cut (12) established by means of an optimisation is preferably by additional connections, which are arranged near another in a transport network.

8. End point according to one of the claims 1 to 7 in which the end point is further adapted to monitor the communication between an end point and another end point and initialises the construction of a shortcut between the end point and the other end point, if in the transport network a direct communication between the end point and the other end point is possible.

9. End point according to one of claims 1 to 8 in which the end point (E1) is arranged to serve as an interface to a network (N1) connected to the end point, whereby data are stored in the end point (E1) by means of which a unique identification of the end point (E1) and the network (N1) connected to the end point (E1) is possible.

10. End point according to claim 9 in which end point is enabled to use in the end point non-public addresses for the data stored in the end point, by means of which a unique identification of the end point (E1) and the network (N1) connected to the end point is possible.

11. End point according to one of claims 1 to 10 wherein the end point is adapted to establish a communication via the secure network when the end point is in a secure network of another end point but is not directly neighboring the other end point in the transport network, the end point constructs a communication via secure network, whereby the secure network is arranged in the higher level network.

12. End point according to one of claims 1 to 11 in which the end point is enabled to monitor the stability of further end points connected in the higher level network, exchange information about the stability and to make a comparison, in order to construct preferred connections between the end points of higher stability.

13. End point according to one of claims 1 to 12 in which the end point is a gateway, preferably a security gateway, in which the end point decrypts data destined for a connected network and forward these decrypted to a component of the connected network, and/or encrypts prior to transfer data received unencrypted from a component of the connected network.

14. End point according to one of claims 1 to 13, in which the end point is a security policy database, preferably for the use of IPsec services ,which are used for the encryption of data, which are sent for one network connected to the end point into a destination network.

15. Decentralised system for the secure transfer of data over a higher level network structure, overlay network, comprising at least two end points corresponding to one of the claims 1 to 14, whereby the at least two of the end points are connected to a transport network.

## Revendications

1. Point terminal pour un système décentralisé de transmission sécurisée de données dans une structure de réseau supérieur, réseau superposé, dans lequel le système décentralisé est formé d'au moins deux points terminaux,
dans lequel le point terminal est agencé pour :
- crypter des données à envoyer et décrypter des données reçues,
- s'agencer en voisin avec d'autres points terminaux dans la structure de réseau supérieur, en fonction de la relation de prédécesseur et de suiveur des réseaux sécurisés qui lui sont attribués,
- dans une étape d'initialisation, établir au moins une liaison sécurisée pour transport de données depuis un point terminal vers un autre point terminal,
- dans une étape de localisation, lorsque le point terminal (E6) n'est pas relié dans la structure de réseau supérieur, déterminer un autre point terminal (E5), qui est déjà relié dans la structure de réseau supérieur, dans lequel le point terminal est configuré pour envoyer, dans l'étape de localisation, une requête d'échange à un point terminal déjà relié (E1), qui fait déjà partie de la structure de réseau supérieur, afin d'établir une liaison sécurisée avec le voisin (E5) à déterminer,
- lors d'une requête d'échange reçue, lorsque le point terminal est déjà relié dans la structure de réseau supérieur, vérifier si le point terminal (E1) représente le prédécesseur du point terminal (E6), qui a initialisé une requête d'échange, selon l'ordre des adresses des points terminaux dans la structure de réseau supérieur, et est ainsi responsable de l'insertion du point terminal (E6) qui a initialisé une requête d'échange, et
- en cas de non-compétence, envoyer la requête d'échange plus loin le long de la structure de réseau supérieur, à un point terminal voisin (E5),
- en cas de compétence, envoyer un signal de réponse, qui comprend les adresses des points terminaux (E1, E5), entre lesquelles le point terminal (E6), qui a initialisé une requête d'échange, est à insérer,
- à réception d'un signal de réponse, qui est dirigé vers le point terminal (E6), lorsque le point terminal n'est pas relié dans la structure de réseau supérieur et a initialisé une requête d'échange, établir une liaison sécurisée respective avec les points terminaux (E1, E5) contenus dans le signal de réponse, et
- dans une étape de transport, transmettre des données vers un point terminal d'un réseau cible.

2. Point terminal selon la revendication 1, dans lequel le point terminal est agencé pour soit établir la liaison sécurisée directement avec les points terminaux contenus dans le signal de réponse, soit établir la liaison sécurisée le long du chemin du message de réponse, avec les points terminaux contenus dans le signal de réponse.

3. Point terminal selon la revendication 2, dans lequel le point terminal est agencé pour ajouter dans le signal de réponse, dans l'étape de localisation, les adresses des réseaux, qui sont voisins du prédécesseur et/ou suiveur et/ou un réseau inconnu sécurisé dans une structure de réseau supérieur.

4. Point terminal (E6) selon la revendication 1, dans lequel le point terminal est prévu pour utiliser un paquet Unicast dans l'étape de localisation.

5. Point terminal (E6) selon l'une des revendications 1 à 4, dans lequel le point terminal est en outre configuré pour :
- envoyer un signal de demande sur la structure de réseau supérieur, pour l'établissement d'une liaison entre un point terminal (E6) et un autre point terminal (E3), pour une transmission de données,
- lors de la réception d'un signal de demande sur la structure de réseau supérieur, qui n'est pas dirigé vers le point terminal de réception, faire suivre ce signal de demande,
- lors de la réception d'un signal de demande, qui est dirigé vers le point terminal de réception, envoyer un signal de réponse au point terminal qui a initié le signal de demande,
- lors de la réception d'un signal de réponse, qui n'est pas dirigé vers le point terminal de réception, faire suivre le signal de réponse sur la structure de réseau supérieur,
- lors de la réception d'un signal de réponse, qui est dirigé vers le point terminal de réception, établir une liaison sécurisée entre le point terminal et l'autre point terminal.

6. Point terminal (E2) selon l'une quelconque des revendications 1 à 5, dans lequel le point terminal (E2) est en outre agencé pour :
- envoyer, dans une étape de vérification, des signaux à un prédécesseur (E1) et à un suiveur (E3),
- dans les cas où le point terminal reçoit un signal de vérification d'un autre point terminal, retourner un signal de réponse,
- s'il n'y a pas de réponse au signal, une réponse dans un intervalle de temps défini, le point terminal (E2) considère que le réseau sécurisé additionnel, ou le prédécesseur et/ou le suiveur, n'est plus relié/ne sont plus reliés dans la structure de réseau supérieur, et répare la liaison.

7. Point terminal selon l'une quelconque des revendications 1 à 6, dans lequel le point terminal est en outre agencé pour échanger des informations sur des liaisons entre des points terminaux, dans le but d'une restructuration, dans lequel un raccourci (12), obtenu par optimisation, est établi de manière préférée par l'intermédiaire de liaisons additionnelles, qui sont agencées proches les unes des autres dans un réseau de transport.

8. Point terminal selon l'une quelconque des revendications 1 à 7, dans lequel le point terminal est en outre agencé pour surveiller la communication entre le point terminal et un autre point terminal, et si une communication directe est possible entre le point terminal et un autre point terminal dans le réseau de transport, initialiser l'établissement d'un raccourci entre le point terminal et l'autre point terminal.

9. Point terminal selon l'une quelconque des revendications 1 à 8, dans lequel le point terminal (E1) est prévu en tant qu'interface avec un réseau (N1) relié au point terminal, dans lequel des données sont déposées dans le point terminal (E1), avec lesquelles une identification unique du point terminal (E1) et du réseau (N1) relié au point terminal (E1) est rendue possible.

10. Point terminal selon la revendication 9, dans lequel le point terminal est prévu pour utiliser des adresses non publiques pour les données qui sont déposées dans le point terminal, avec lesquelles une identification unique du point terminal (E1) et du réseau (N1) relié au point terminal (E1) est rendue possible.

11. Point terminal selon l'une quelconque des revendications 1 à 10, dans lequel un point terminal est agencé de sorte que, lorsque le point terminal se trouve dans un réseau sécurisé d'un autre point terminal, mais n'est pas un voisin direct d'un autre point terminal dans le réseau de transport, le point terminal établit une communication sur le réseau sécurisé, le réseau sécurisé étant agencé dans le réseau supérieur.

12. Point terminal selon l'une quelconque des revendications 1 à 11, dans lequel le point terminal est prévu pour surveiller la stabilité également dans des points terminaux additionaux reliés au réseau supérieur, pour échanger des informations en lien avec la stabilité, et pour faire des comparaisons afin d'établir de préférence des liaisons entre des points terminaux à stabilité supérieure.

13. Point terminal selon l'une quelconque des revendications 1 à 12, dans lequel le point terminal est une passerelle, en particulier une passerelle sécurisée, dans lequel le point terminal décrypte des données qui sont définies pour un réseau relié et fait suivre les données décryptées à un composant du réseau relié et/ou crypte des données avant la transmission, que le point terminal a reçues non cryptées d'un composant du réseau relié.

14. Point terminal selon l'une quelconque des revendications 1 à 13, dans lequel le point terminal comprend une base de données de police de sécurité, en particulier pour l'utilisation de services IPsec, qui sont utilisés pour l'encryptage de données, qui sont envoyées depuis un réseau relié au point terminal vers un réseau cible.

15. Système décentralisé pour la transmission sécurisée de données sur une structure réseau supérieur, réseau superposé, comprenant au moins deux point terminaux selon l'une quelconque des revendications 1 à 14, les au moins deux points terminaux étant reliés à un réseau de transport.
